(19) Europäisches Patentamt European Patent Office Office européen des brevets

(11) **EP 3 859 620 A1**

(12) **EUROPEAN PATENT APPLICATION**

(43) Date of publication:
**04.08.2021 Bulletin 2021/31**

(51) Int Cl.:
**G06Q 10/06** (2012.01)      **G06Q 50/00** (2012.01)
**G06Q 10/04** (2012.01)

(21) Application number: **20154159.6**

(22) Date of filing: **28.01.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Weblabcenter Inc.**
**Frisco, TX 75034 (US)**

(72) Inventors:
• **TRAN-GIA, Phuoc**
**97076 Würzburg (DE)**

• **MOLDOVAN, Christian**
**97074 Würzburg (DE)**
• **TRAN-GIA, Thomas**
**97267 Himmelstadt (DE)**
• **HOSSFELD, Tobias**
**97074 Würzburg (DE)**
• **NGUYEN, Nhat Vi**
**75034 Frisco, TX (US)**

(74) Representative: **LifeTech IP**
**Spies & Behrndt Patentanwälte PartG mbB**
**Elsenheimerstraße 47a**
**80687 München (DE)**

(54) **ENTROPY BASED RATING**

(57)     A method for rating entities of a group is provided. The method comprises receiving rating values for one or more other entities, including a time stamp, building a matrix of combined rating values, and determining entropy values for each entity. The entropy value is indicative of a rate an entity rates other entities with a same rating value. The method also comprises determining goodness values for each entity, wherein each of the goodness values is dependent from a respective fairness value for each entity and the respective entropy value of each entity, the goodness value being indicative of a quality metric, and determining the fairness values for each entity, wherein the fairness value is dependent on the related goodness value, the fairness value being indicative of a difference of an entity rating in comparison to other ratings. The last two steps are repeated until convergence.

FIG. 1

**Description**

FIELD OF THE INVENTION

The invention relates generally to a rating method, and more specifically, to a computer-implemented method for rating entities of a group of entities. The invention relates further to a rating system for rating entities of a group of entities, and a related computer program product.

BACKGROUND

Ratings have become a very popular mechanism to allow individuals to make standardized comments about a quality of a service delivered, a product quality, a timeliness of delivery and many other attributes. The principle is typically implemented straightforward such that a number from a predefined number range can be associated with a product, a person, a service, and so on. In this way, other users may get a summarized impression of how other users rate the service, the product, and so on, respectively. Such ratings may also work bidirectional: a buyer may rate a provider and a provider may rate its customer, e.g., in terms of prompt payment, interaction quality, etc.

Such a method may also be used for a micro-task platform, wherein service providers or self-employed workers can offer simple tasks or jobs for a little compensation to be completed. The self-employed workers may work for a plurality of larger companies offering jobs being performed by workers. However, the ratings given in such environments are often not very honest and reliable, partially because of the low values of the delivered services and the large number of such work contracts. Examples of the mentioned jobs may comprise filling out a survey, retrieve a piece of information, classify an image for, e.g., an artificial intelligence service or any other low value fast performed service.

In today's crowdsourcing systems employers may decide whether a worker has successfully completed a job and should therefore be paid or whether he failed and should not be paid. This decision not only impacts the compensation of the work, but also his success-rating on the respective platform. The success-rating may typically be calculated as the share of successfully completed jobs. However, since the payment of many jobs is very low (e.g., a couple of cents) and the verification of the workers submission is time-consuming for the employers, many employers simply mark every worker be successful or not at all. A post-processing of the submissions may often be conducted later using automated tools. This clearly undermines the value of the rating and makes them useless for others.

On the other side, success-ratings of a worker determine which jobs are available to him. For example, high profile jobs, with good payments are often only available to workers with very high ratings. While employers have an indirect method to rate workers, workers only have the possibility to complain if they feel treated unjustly, e.g., when they are not.

For the crowdsourcing platform point of view, it is not easily possible to detect which ratings are true and which are false. If many employers give false ratings, the reputation of the platform may suffer because bad (low success-rate) workers have equal access to high profile jobs as good workers (high success-rate). In addition, there is an issue of account selling. An account on which many jobs have been completed with a high success-rate may have a significant value. Since the success-rate is calculated as a simple mean value, many failures and thus bad ratings are required for the rating to change significantly. On this basis, a bad worker can buy a good account and complete high-profile jobs. It is easy understandable that such behavior is undermining the rating process, and thus, undermining the success of the related crowdsourcing or micro-worker platform.

Another example for such a rating platform may be a crypto-currency. These are used to trade anonymously over the Internet. Due to the anonymity, there is a counterpart risk of receiving the agreed value in the crypto data currency for a delivered product or service. Because of this, crypto-currency exchanges may typically use a trust system where users rate each other after a transaction or an exchange. For example, a bitcoin trading platform uses a trust system in which fraudsters have a rating of -10 while trustworthy users have a rating of +10. Such lists may be made public to support trustworthy parties.

In addition to these two examples, the problem of good and fair ratings exists for almost every rating platform in a large variety of offerings on the Internet. Hence, there may be a need to overcome the limitations of existing rating platforms and to provide a concept for ratings with an increased quality, reliability and which are more trustworthy.

SUMMARY

This need may be addressed by a computer-implemented method for rating entities of a group of entities, a related rating system for rating entities of a group of entities, and a computer program product, according to the independent claims.

According to one aspect of the present invention, a computer-implemented method for rating entities of a group of entities may be provided, wherein the entities rate each other, at least in parts. The method may comprise receiving rating values from rating entities $u_i$ of the group for one or more other entities $v_j$ of the group being rated. A corresponding sequence indication of the rating may be related to each of the rating values.

The method may also comprise building a matrix of combined rating values, wherein the matrix element values $W_{ij}(u_j, v_j)$ are indicative of received ratings, and determining entropy values $h_i(u_i)$ for each entity $u_i$ of the group. Thereby, the entropy value $h_i(u_i)$ may be indicative of a rate an entity rates other entities with a same rating value.

The method may additionally comprise determining goodness values $g_j(v_j)$ for each entity $v_j$, wherein each of the goodness values is dependent from a respective fairness value $f_i(u_i)$ for each entity $u_i$ and the respective entropy value $h_i(u_i)$ of each entity $u_i$, the goodness value being indicative of a quality metric of the entity $v_j$, determining the fairness values $f_i(u_i)$ for each entity $u_i$, wherein the fairness value is dependent on the related goodness value $g_j(v_j)$, the fairness value being indicative of a difference between the goodness value of the rated entity $g_j(v_j)$ and the rating value $W_{ij}(u_i, v_j)$ given by $u_i$, and repeating the steps of determining the goodness values and the step of determining the fairness values until a stop condition is met, resulting in consistent goodness values for rated entities and consistent fairness values of rating entities.

According to another aspect of the present invention, a rating system for rating entities of a group of entities, wherein the entities rate at least in parts each other, may be provided. The rating system may comprise a receiving unit adapted for receiving rating values from rating entities $u_i$ of the group for one or more other entities $v_j$ of the group being rated, wherein a corresponding sequence indication of the rating may be related to each of the rating values, a storage unit adapted for storing a matrix of combined rating values, wherein the matrix element values $W_{ij}(u_j, v_j)$ may be indicative of received ratings, and an entropy determination module adapted for determining entropy values $h_i(u_i)$ for each entity $u_i$ of the group, wherein the entropy value $h_i(u_i)$ may be indicative of a rate an entity rates other entities with a same rating value.

Furthermore, the rating system may also comprise a goodness value determination module adapted for determining goodness values $g_j(v_j)$ for each entity $v_j$, wherein each of the goodness values is dependent from a respective fairness value $f_i(ui)$ for each entity $u_i$ and the respective entropy value $h_i(u_i)$ of each entity $u_i$. The goodness value may be indicative of a quality metric of the entity $v_j$.

The rating system may also comprise a fairness value determination module adapted for determining the fairness values $f_i(u_i)$ for each entity $u_i$, wherein the fairness value is dependent on the related goodness value $g_j(v_j)$. The fairness value may be indicative of a difference between the goodness value of the rated entity $g_j(v_j)$ and the rating value $W_{ij}(u_i, v_j)$ given by $u_i$.

Last but not least the rating system may comprise a trigger unit adapted for repeatedly triggering the goodness value determination module and the fairness value determination module until a stop condition is met, resulting in consistent goodness values for rated entities and consistent fairness values of rating entities.

The proposed computer-implemented method for rating entities of a group of entities, wherein the entities rate each other, at least in parts, may offer multiple advantages, technical effects, contributions and/or improvements:

In the embodiment of a micro-worker platform - although the general inventive concept is not limited to this embodiment - employers and worker may be treated as peers by introducing an employer rating and allowing workers to rate employers. This way, it may become easier to detect employers who frequently give false or misleading ratings and do not pay workers for good submissions. This will make it easier for workers to avoid fraudulent employers.

The introduction of a database for the rating system that not only stores, but may also aggregate and weighing ratings - on both directions - using a dedicated method may increase the value of the rating for both, the employer as well as the workers. The novel fairness-goodness-system that not only evaluates user based on their performance, but which may also allow an evaluation of how trustworthy ratings are users give each other. The fairness-goodness determination may be performed on a daily basis but is also open to be determined at every suitable time, e.g., twice a day, every hour or event-based - e.g., if a predefined number of new ratings have arrived at the rating system. Additionally, the rating system may also allow processing complaints from workers and/or employers by a natural language system. For example, in case a platform does not offer workers a direct possibility to rate the employer, but does offer them the possibility to complain, these complaints can be interpreted using a natural language processing system that interprets the complaint as a rating

Users - e.g., employers - who may always give the same rating may not be weighted as much as other users who differentiate their ratings much better (i.e., give ratings with higher entropy). The entropy-based approach used in the here proposed concept may prevent an undermining of the rating system due to automated identical ratings.

Furthermore, it is an advantage of the here proposed concept that older ratings are "gradually forgotten" because a special weighing approach may degrade the weights of older ratings. So, more recent ratings may indicate a development of a workers performance. This concept may also reduce a motivation for worker account-selling. Good performing workers may sell their accounts to low performers so that they also get jobs that normally would only be given to high performance workers - i.e., those with good rating. However, the value of the older ratings may decrease faster than the low performers may get new jobs so that the procurement of a high-performance account will not show a positive return on investment. Generally, the forgetfulness factor may adjust the rating quicker than in traditional approaches.

In a straightforward view, a system and method is proposed that receives as input a list of all entities in the rating system or a reputation platform that allows giving and receiving ratings; the ratings may be given and received by entities. Input values may also comprise the date (and time, or a sequence indicator) when each ratings has been given and system specific parameters are used for weighing.

As output values, the system generates: an entropy value per entity, an entropy-weighted goodness value of each entity weighted, an entropy-weighted fairness value for each entity, a forgetfulness- and entropy-weighted goodness value of each entity weighted, and an forgetfulness- and entropy-weighted fairness value of each entity weighted. Thus, the here proposed concept may use input value which may also be available from more traditional approaches, but it may determine much more reliable combined rating values that reflect the reality much better than those of traditional rating systems.

There exist many more examples other than micro-task platforms where ratings play an important role. One example is over the counter cryptocurrency exchanges where the counterparty risk of a transaction is high due to the increased anonymity of cryptocurrencies. To detect fraudsters and untrustworthy traders, a good rating system is required. Another example is search engines which use web page ratings to create a ranking of web pages that are relevant to the entered search term. In this scenario ratings are not assigned by people but via the number and rating of all other pages that link to the page.

In the following, additional embodiments of the inventive concept will be described.

According to an advantageous embodiment of the method, the entropy value $h_i$ for an entity may be determined by

$$h_i = - \sum[\text{for } i=1 \text{ to } n] \; p_i * \log(p_i),$$

wherein

n is a number of ratings an entity $v_j$ has given, and

$p_i$ is a rate with which an entity gives a rating $r_i$. This formula may also be known as Shannon formula. It may also be interpreted as a "well-thought" distribution of ratings. It may give an indication how well the raters - i.e., the rating entities - may have given their rating. If an automated rating system may end up with always the same rating, it may then result in a low entropy of ratings which may indicate a comparable low trustworthiness of the rating. If this would happen too often, the reputation of the reputation system may thus be undermined. Then, the entropy determination proves to be a good instrument against such low trust ratings.

According to another advantageous embodiment of the method, the n*n matrix of combined rating values may comprise as matrix elements values $W_{ij}(u_i, v_j)$ a weighted sum of received rating values. In one embodiment, the weighted sum of received ratings may be an average value of received rating values (i.e., equal weights may be used). However, also additional weightings may be used and/or added - e.g., weightings depending on a transaction price, a payment value, a timeliness of completing a service, and so on. In the case of cryptocurrencies, the weighting may include the transaction volume and the delay of the payment. For search engines or page rating systems, the weighting may include the client's browsing history or the age of a web page.

According to one useful embodiment, the method may comprise, upon receiving a new rating value, a matrix element value that may be updated according to

$$W_{ij}(u_i \; v_j)_{new} = (1-\lambda) * W_{ij}(u_i, v_j)_{old} + \lambda * (newRating \; value),$$

wherein $\lambda$ is a forgetfulness factor in the range $0 < \lambda < 1$. Thus, more recent ratings may have a higher influence in the combined rating value visible to other entities, i.e., users of the rating platform. Thus, older ratings may lose influence of the combined rating value depending on the value of $\lambda$. Useful results may be achieved with $\lambda$ being 0.1. However, also other $\lambda$ values may deliver a proper forgetfulness of the rating system. The chosen value of $\lambda$ may be a function of the underlying entities for which the ratings are given, the types of rating entities, respective timeframes in which ratings may be received, as well as the size of the group.

It may also be noted that one of two implementation options may be chosen. According to a first option, only ratings given from a single employer to a single worker may be subject to the forgetfulness. In another optional embodiment, the forgetfulness factor may be used across ratings of different users.

According to one useful embodiment of the method, each goodness value $g_j(v_j)$ may be determined by

$$g_j(v_j) = (\sum[\text{for all entities } u_i \text{ which rate other entities } v_j] \, f_i(u_i) * W_{ij} \, (u_i, v_j) * h_i(u))$$

$$/ \, (\sum[\text{for all entities } u_i \text{ which rate other entities } v_j] \, h_i(u_i)).$$

With this, the entropy of the rating may influence the goodness of the ratings. Thus, the higher the entropy value may become, the better the goodness values are. This may have a positive consequence for the quality of the underlying method used for the rating system.

According to a further useful embodiment of the method, each fairness value $f_i(u_i)$ may be determined by

$$f_i(u_i) = 1 - (1 \, / \, R * O) * (\sum[\text{for all entities } v_j \text{ rated by entities } u_i] \, |W_{ij}(u_i, v_j) - g_j(v_j)|,$$

wherein
R = range of possible ratings, and O = number of entities rated by entity $u_i$. Hence the fairness values depend on the respective goodness values which themselves depend on the respective entropy values. Consequently, an iterative approach for bringing the underlying formulas to a convergence may be advantageous. The below discussed preferred embodiments will demonstrate that in more detail.

According to one permissive embodiment of the method, an entropy value of an entity not having been rated may be determined as fixed value $h \in [0,1]$. Thus, also entropy values may be used for no rated entities which may prevent a hole in the determination formulas for a determination of the goodness values.

According to an additionally advantageous embodiment of the method, the stop condition may be met if $X(f_i, f_i\text{-}1, g_j, g_j\text{-}1) \leq \varepsilon$, wherein $\varepsilon$ is a comparably small real value. Hence, the algorithm may converge when the change between fairness and goodness scores in consecutive iterations for all vertices in the matrix may be less than an error bound, which may be set to e.g., 0.001 (however, any other value may be determined experimentally). The then determined scores or values for fairness and goodness from the last iteration may be used as the final scores.

Furthermore, embodiments may take the form of a related computer program product, accessible from a computer-usable or computer-readable medium providing program code for use by, or in connection with, a computer or any instruction execution system. For the purpose of this description, a computer-usable or computer-readable medium may be any apparatus that may contain means for storing, communicating, propagating or transporting the program for use by, or in connection with the instruction execution system, apparatus, or device.

BRIEF DESCRIPTION OF THE SEVERAL VIEWS OF THE DRAWINGS

It should be noted that embodiments of the invention are described with reference to different subject-matters. In particular, some embodiments are described with reference to method type claims, whereas other embodiments are described with reference to apparatus type claims. However, a person skilled in the art will gather from the above and the following description that, unless otherwise notified, in addition to any combination of features belonging to one type of subject-matter, also any combination between features relating to different subject-matters, in particular, between features of the method type claims, and features of the apparatus type claims, is considered as to be disclosed within this document.

The aspects defined above, and further aspects of the present invention, are apparent from the examples of embodiments to be described hereinafter and are explained with reference to the examples of embodiments, but to which the invention is not limited.

Preferred embodiments of the invention will be described, by way of example only, and with reference to the following drawings:

Fig. 1 shows a block diagram of an embodiment of the inventive computer-implemented method for rating entities of a group of entities, wherein the entities rate each other, at least in parts.

Fig. 2 shows a block diagram of an embodiment of a matrix with combined rating values as well as an entropy vector.

Fig. 3 shows a diagram of rating employers and workers being rated.

Fig. 4 shows a diagram of an embodiment of a complete process flow of the inventive concept to arrive at better rating results.

Fig. 5 shows a flow chart of a more implementation new version of the inventive concept.

Fig. 6 shows a block diagram of the rating system for rating entities of a group of entities.

Fig. 7 shows a block diagram of a computing system comprising the rating system according to Fig. 6.

DETAILED DESCRIPTION

In the context of this description, the following conventions, terms and/or expressions may be used:

The term 'rating' may denote a value chosen from a selection option for assessing a quality or another parameter of an entity of a group of entities having delivered a service, a product or anything comparable, so that a receiver can assess the received service or product or anything comparable. The rating may be a subjective rating or objective rating. It may also be directed at a reputation and/or trustworthiness of an entity of the group. Hence, also medical services may be assessed, as well as a trust value for an exchange platform offering a crypto-currency and/or its users. Basically, everything that may be mutually assessed may also be assessed using an electronic platform or rating system or reputation system.

The term 'entity' may denote participants of the rating method/system. Each entity may represent one unit which may be rated or which may give a rating for another unit that may be denoted as entity of a group. The group collaborates for the purpose of the rating on the rating system. However, underlying the ratings real world transaction may build the basis.

The term 'rating values' may denote typically an integer value and a range of 1 to 3, 1 to 5, 1 to 10 or any other suitable value range. In some embodiments also non-integer values may be used. Also typically, a low value may relate to a rating, e.g., low-quality, whereas a high-value may relate to a positive rating. Other systems may also include negative rating values.

The term 'rating entity $u_i$' may denote a member of the group of entities rating other entities. A member being rated may be denoted as $v_j$. However, the same member of the group may have a rating role as well as a role of an entity being rated. Data may be stored about the rating entity, as well as about the rated entity in a database for further processing.

The term 'reputation system' or rating system may denote a program or (e.g., hardware) platform allowing users to rate each other. The ratings may be stored in a database.

The term 'sequence indication' may denote a temporal indicator of a time a rating was given. Hence, the sequence indication may be a relative indicator showing only the sequence of ratings and the position in a sequence, or it may be a time-stamp including data and time.

The term 'combined rating value' may denote a numerical value, typically a real value (in a mathematical sense). Such combined rating value may be represented by the rating matrix. Each matrix element may represent a combined rating value. The combined rating value may be a simple mean value of all rating values received; alternatively, weighing factors for the sequence of received rating values may be used. Furthermore, a forgetfulness factor may be used so that younger rating values may be rated higher and that older rating values may be forgotten gradually.

The term 'entropy values $h_i(u_i)$' may denote a measure of a variability of received ratings or given ratings. The higher the entropy value, the higher is the variability of rating for (or of) a given entity. If an entropy weighing h is increased, the rating that users with low entropy gave may be weighted less when determining the combined rating value of a user that received the rating. If the entropy weighing h is decreased, the rating that users with low entropy give may be weighted higher when determining the combined ratings value of a user that received the rating.

The term 'forgetfulness factor' may denote a variable enabling a higher weight for more recent ratings. Older ratings may be "forgotten" more or less fast depending on the value of the forgetfulness factor; the higher the forgetfulness factor is the faster older ratings may play a smaller role. In contrast, if the forgetfulness factor is decreased, older ratings may have a higher impact on the weighted combined ratings from a specific user.

The term 'goodness value $g_j(v_j)$' may denote a measure for a difference of an entity rating in comparison to other ratings. Thus, also here the goodness value may increase if the user is good in rating others. In simple terms: the goodness value may describe how successful a user is at completing jobs.

The term 'fairness value $f_j(u_j)$' may denote a quality metric of an entity and its ability to rate others in a differentiated way. Thus, the fairness value may increase if the user is good in rating others.

The term 'worker' may denote a user or entity representing a person performing a task, typically, for an employer. Hence, the term 'employer' may denote a user or entity, firm, company, person or, any other entity that typically pays for or rents a service of another person or user.

In the following, a detailed description of the figures will be given. All instructions in the figures are schematic. Firstly, a block diagram of an embodiment of the inventive computer-implemented method for rating entities of a group of entities, wherein the entities rate each other is given, at least in parts. Afterwards, further embodiments, as well as embodiments of the a rating system for rating entities of a group of entities, wherein the entities rate each other, at least in parts, will be described.

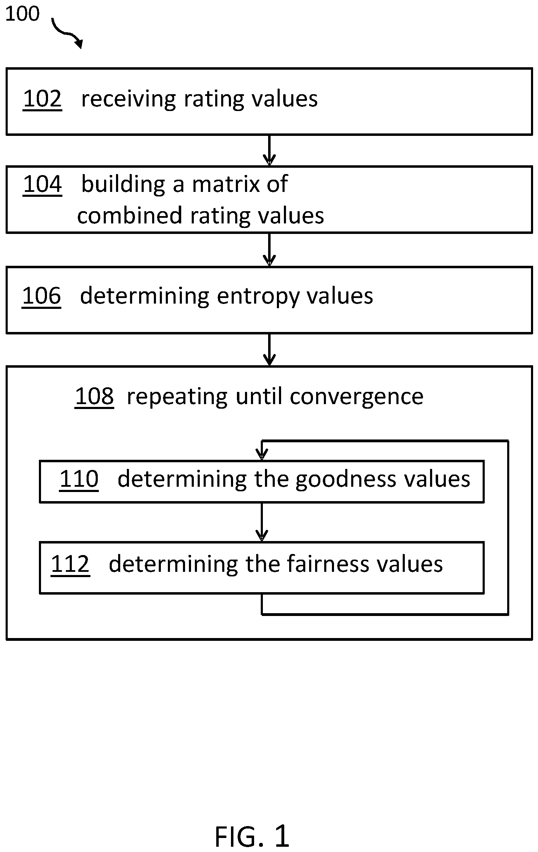

**Fig. 1** shows a block diagram of a preferred embodiment of the computer-implemented method for rating entities of a group of entities, wherein the entities rate each other, at least in parts. The entities can be users, e-commerce shoppers, workers, e-commerce sellers, employers, users of a crypto-currency, or also web sites, and so on. Basically, every user or service of a rating or reputation platform and/or an entity being rated can belong to the group of raters or being rated.

The method 100 comprises receiving, 102, rating values - e.g., 1 to 5; or any other suitable range for a given situation - from rating entities $u_i$ of the group for one or more other entities $v_j$ of the group being rated. Within the group, raters, and the ones being rated, are basically treated equally.

A corresponding sequence indication - e.g., a time-stamp with, e.g., date/time, and/or a sequence number - of the rating is related to each of the rating values. This allows differentiating between older and younger ratings.

The method 100 comprises building, 104, a matrix of combined rating values of the received rating values. The matrix element values $W_{jj}(u_j, v_j)$ are indicative of received ratings. The individual rating values can be integer values (however, the method works with real numbers as well) but the combined rating values may be typically real values.

The method 100 comprises also determining, 106, entropy values $h_i(u_i)$, in particular one entropy value for each entity $u_i$ of the group. Thereby, the entropy value $h_i(u_i)$ is indicative of how often (i.e., the rate) an entity rates other entities with a same rating value. In case of non-integer values for the rating - e.g.: 9.9, 9.8, 9.7 - also similar ratings (a difference to a center value of a subgroup of rating being below a threshold value) may be treated as identical values.

Additionally, the method comprises determining, 110, goodness values $g_j(v_j)$, in particular one goodness value for each entity $v_j$, wherein each of the goodness values is dependent from a respective fairness value $f_i(u_i)$ for each entity $u_i$ and the respective entropy value $h_i(u_i)$ of each entity $u_i$, the goodness value being indicative of a quality metric of the entity $v_j$, and determining, 112, the fairness values $f_i(u_i)$ for each entity $u_i$, wherein the fairness value is dependent on the related goodness value $g_j(v_j)$. Thereby, the fairness value is indicative of a difference between the goodness value of the rated entity $g_j(v_j)$ and the rating value $W_{ij}(u_i,v_j)$ given by $u_i$.

Last but not least, the method 100 comprises repeating, 108, the step 110 of determining the goodness values and the step 112 of determining the fairness values until a stop condition is met, resulting in consistent goodness values for rated entities and consistent fairness values of rating entities.

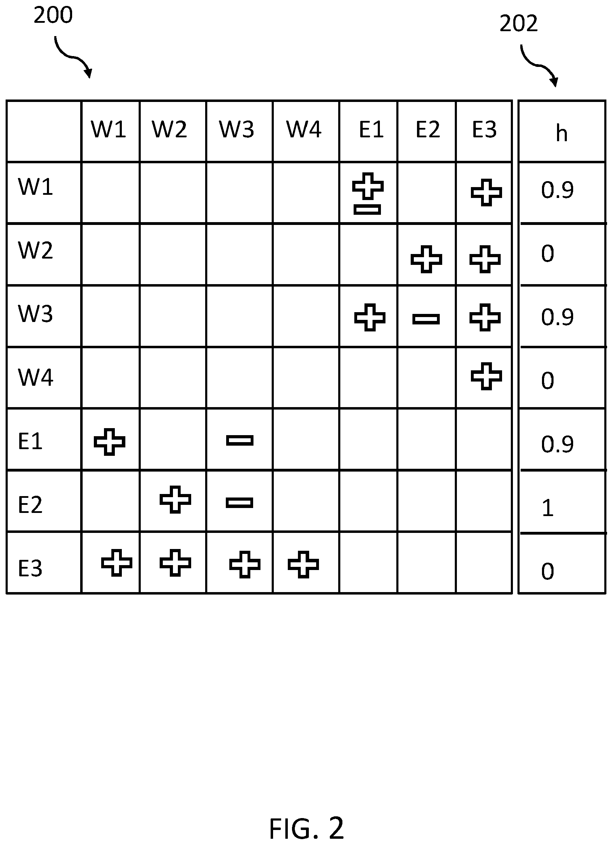

**Fig. 2** shows a block diagram of an exemplary matrix 200 with rating values. The matrix of combined rating values shows the rating in the upper right corner in which workers W1, W2, W3, W4 have rated employer E1, E2, E3. In general, the method and system works as follows: A user E1 gives another user W1 a rating R1. If this is the first rating E1 gives W1, R0 is stored in a database at (E1, W1). If E1 has previously given W1 a rating, the existing rating R0 from the database at (E1, W1) is updated based on the forgetfulness, using the formula, as explained above. The new rating is again stored in the database at (E1, W1). Then, the Shannon entropy (see above) value is determined and stored in a second database. However, the rating database and the entropy database may be technically the same database and may also use the same or different storage systems. A central system performing the determinations may be enabled to read from the database(s).

It may also be mentioned that the matrix can also have rating values in the top left and bottom right quadrant. This may be the case if workers may also act as employers (sub-contracting) in the embodiment of the micro-worker platform. However, in other embodiments of the rating system - e.g., in case of web pages rating each other or in case of a crypto-currency system - rating may go in any direction and the matrix may be more or less full of combined rating values without "white spots".

Next, the entropy-fairness-goodness determination is performed at an arbitrary frequency returning the goodness factor and the fairness factor for each of the users of the rating system. Hence, the goodness value of a user is the final aggregated rating of a user which can be seen as free from disturbing and misleading effects of the rating system. The fairness value of a user describes the trustworthiness of his ratings. For the determination mechanism binary, as well as non-binary, rating systems are possible.

The shown matrix 200 is just one little example of a real matrix in which 1000s (or 10.000s or more) of employers and workers rate each other. It may also be noted that in this example and the following, as rating crowd, a micro-worker platform is used. However, the underlying principle may be used for any other rating or reputation system in social media or elsewhere.

A "+" in the matrix 200 may exemplary show a good combined rating value, a "+/-" may show a neutral rating, and a "-" may indicate a negative rating. In real implementations, the rating value may allow a more fine grained rating. It may be easy to understand that workers do not rate other workers and employers do not rate other employers. Thus, the matrix is half empty. However, on the right side of the matrix also a vector h 202 is shown. This may represent the entropy values for each combined rating value in the matrix 200. The entropy value can be imagined as the spread of different ratings for an entity. If one subgroup of the entities may only give identical ratings, the entropy is low for the combined value.

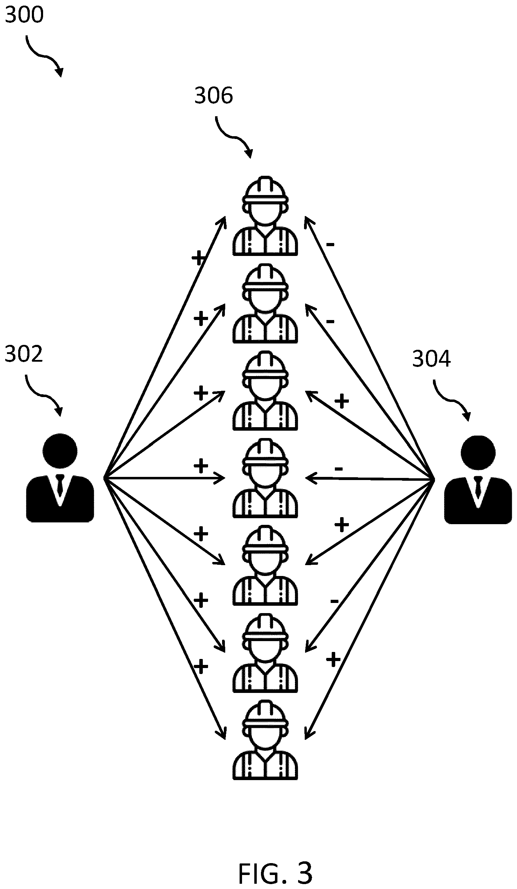

This is shown in the diagram 300 **Fig. 3.** Fig. 3 shows the two employers 302, 304 and a plurality of workers 306. The left employer 302 has given always the same rating "+" to all workers. Thus, the entropy of his ratings is comparably low. On the other side, employer 304 has given different ratings to different workers. Thus, these rating values have a much higher entropy value and seem to be much more reliable. On the other side, the ratings of the employer 302 may be generated by automated tool or he may have given always the same rating without any thoughts. Thus, these ratings may have a much lower value for success-ratings of the workers.

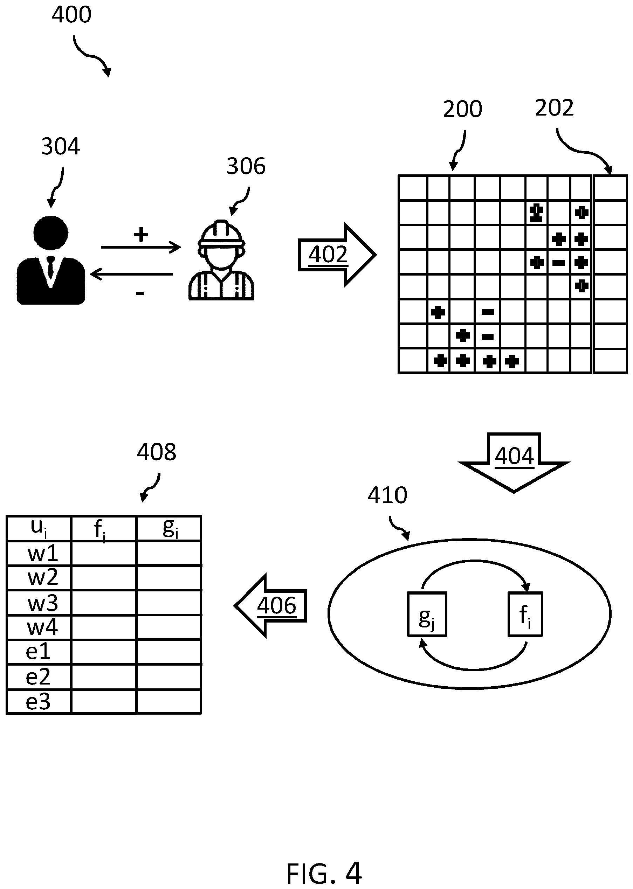

**Fig. 4** shows a diagram 400 of the complete process of the proposed concept. In a first phase, i.e., top left side of the diagram 400 - entities rate each other (e.g., employers 302 and workers 306, compare Fig. 3). A plurality of ratings - in particular for the same entity - is combined (indicated by arrow 402) in the matrix 200 as discussed in the context of Fig. 3. Also, the entropy vector 202 is shown symbolically on the right side of the matrix 200.

Based on this matrix 200 and the entropy vector 202 (indicated as arrow 404), an iterative process 410 comprising a determination of goodness and fairness factors is started until a convergence condition is met. The result of this iterative process 410 results (indicated by arrow 406) in the matrix 408, in which each entity $u_i$ of the group has a respective and related fairness value $f_i$ and goodness value $g_i$.

These values (fairness and goodness) may also be taken into account for a determination of the combined rating value, i.e., the matrix elements of matrix 200. As a final result, the rating values available for users (all services) of a rating platform or reputation platform may have a much better meaning by intrinsically downgrading non-honest, non-reflected or automatically generated rating values.

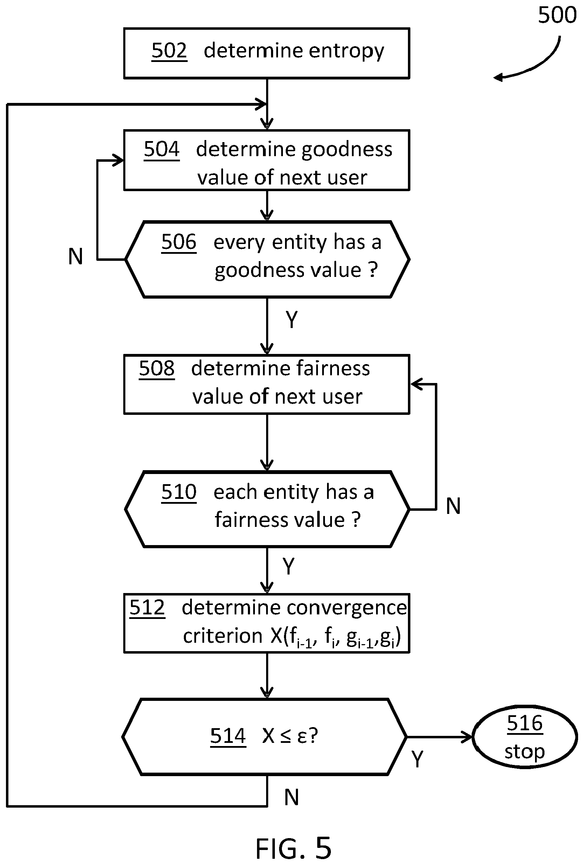

**Fig. 5** shows a block diagram of a more implementation-near flowchart 500 of the proposed concept. After start values for the various variables have been defined (not shown), the entropy values for the entities or the group are determined, 502. Then, a goodness value is determined, 504, for a next user. In case of the first loop for the shown flowchart, the goodness value is determined for the first entity. If a goodness value has been determined, 506, for each of the entities of the group - case "Y" - the process continues. Otherwise, - case "N" - the process loops back to a determination of a goodness value for a next user.

If users have received a related goodness value, the process continues with a determination 508 of a fairness value for a next user. Also here, a loop process is used, controlled by the determination 510, whether each user has a related fairness value. If that is the case - "Y" - a determination 512 of a convergence criterion is performed. If the value of the convergence criterion X is determined, 514, to be below or equal to an epsilon value, the process is stopped, 516, and the goodness and fairness values are determined as values on the given convergence criterion.

In case the convergence criterion is not met at determination 514, the process loops back to the determination of goodness values 504 for all users and/or entities. This may imply a next iteration of determining a final set of goodness and fairness values for all entities of the group.

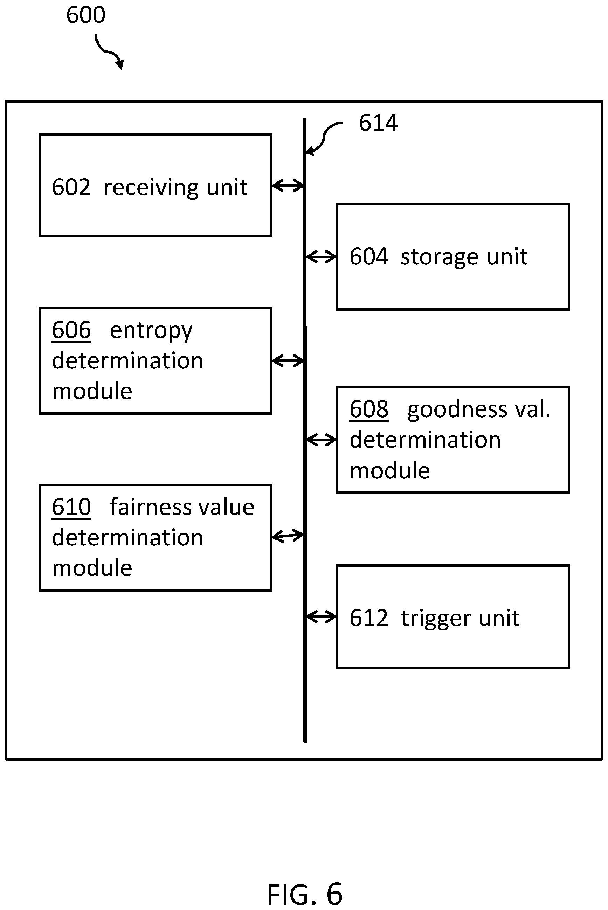

For completeness reasons, **Fig. 6** shows a block diagram of the inventive rating system 600 for rating entities of a group of entities, in which the entities rate each other, at least in parts. The system 600 comprises a receiving unit 602 adapted for receiving rating values from rating entities $u_i$ of the group for one or more other entities $v_j$ of the group being rated, wherein a corresponding sequence indication of the rating is related to each of the rating values.

The system 600 also comprises a storage unit, 604 adapted for storing a matrix of combined rating values, wherein the matrix element values $W_{ij}(u_i,v_j)$ are indicative of received ratings, as well as an entropy determination module 606 adapted for determining entropy values $h_i(u_i)$ for each entity $u_i$ of the group. Thereby, the entropy value $h_i(u_i)$ is indicative of a rate an entity rates other entities with a same rating value.

Additionally, the system comprises a goodness value determination module 608 and the fairness determination module 610. The goodness value determination module 608 is adapted for determining the goodness values $g_j(v_j)$ for each entity $v_j$, wherein each of the goodness values is dependent from a respective fairness value $f_i(u_i)$ for each entity $u_i$ and the respective entropy value $h_i(u_i)$ of each entity $u_i$, the goodness value being indicative of a quality metric of the entity $v_j$; the fairness value determination module 610 is adapted for determining the fairness values $f_i(u_i)$ for each entity $u_i$, wherein the fairness value is dependent on the related goodness value $g_j(v_j)$, the fairness value being indicative of a difference between the goodness value of the rated entity $g_j(v_j)$ and the rating vaue $W_{jj}(u_j,v_i)$ given by $u_i$.

Last but not least, the system 600 comprises a trigger unit 612 which is adapted for repeatedly triggering the goodness value determination module 608 and the fairness value determination module 610 until a stop condition is met (compare 514 or Fig. 5), resulting in consistent goodness values for rated entities and consistent fairness values of rating entities.

It should also be noted that the modules and units 602, 604, 660, 608, 610, 612 may be interconnected for signals and/or message exchange. This may be implemented by required 1:1 interconnections between the modules and/or units or by a rating system 600 internal bus system 614.

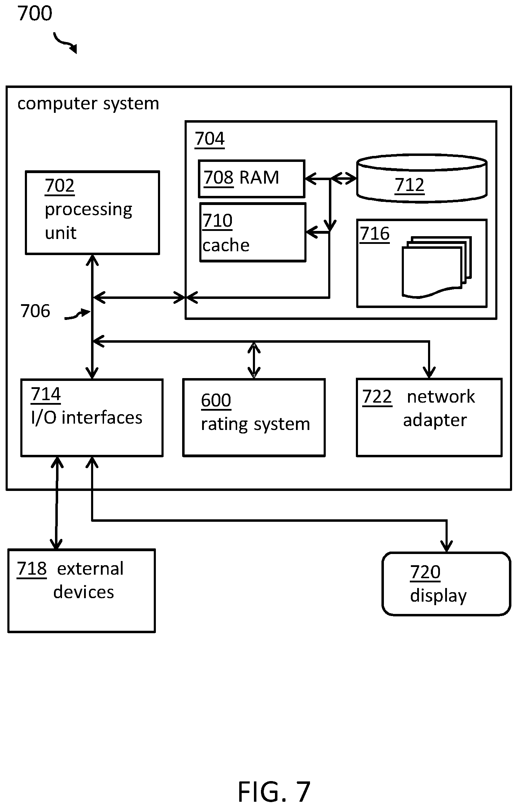

Embodiments of the invention may be implemented together with virtually any type of computer, regardless of the platform being suitable for storing and/or executing program code. **Fig. 7** shows, as an example, a computing system 700 suitable for executing program code related to the proposed method.

The computing system 700 comprises at least one central processing unit (CPU) 702, e.g., with one or more processing cores. A program/utility 716, having a set (at least one) of program modules, can be stored in a memory subsystem 704. The program/utility 716 can be, e.g., an operating system, one or more application programs, other program modules, and program data and is not restricted to this. Program modules 716 may generally carry out the functions and/or methodologies of embodiments of the invention, as described herein. The memory subsystem 704 may comprise a RAM 708 (random access memory of any form) or may be enhanced by cache memory 710, and/or long term storage 712.

The computer system 700 may also communicate with one or more external devices 718 such as a keyboard, a pointing device, a display 720, etc.; these devices may be combined in a touch-screen that enable a user to interact with the computer system 700; and/or any devices (e.g., network card, modem, etc.) that enable the computer system 700 to communicate with one or more other computing devices. Such communication can occur via input/output (I/O) interfaces 714. Still yet, the computer system 700 may communicate with one or more networks such as a local area network (LAN), a general wide area network (WAN), and/or a mobile public network (e.g., the Internet) via the network adapter 722. As depicted, network adapter 722 may communicate with other components of the computer system 700 via the bus 718. It should be understood that although not shown, other hardware and/or software components could be used in conjunction with the computer system 700. Examples, include, but are not limited to: microcode, device drivers, redundant processing units, etc.

Additionally, the rating system 600 for rating entities of a group of entities may be attached to the bus system 706.

The descriptions of the various embodiments of the present invention have been presented for purposes of illustration, but are not intended to be exhaustive or limited to the embodiments disclosed. Many modifications and variations will be apparent to those of ordinary skills in the art without departing from the scope and spirit of the described embodiments. The terminology used herein was chosen to best explain the principles of the embodiments, the practical application or technical improvement over technologies found in the marketplace, or to enable others of ordinary skills in the art to understand the embodiments disclosed herein.

The present invention may be embodied as a system, a method, and/or a computer program product. The computer program product may include a computer readable storage medium (or media) having computer readable program instructions thereon for causing a processor to carry out aspects of the present invention.

The medium may be an electronic, magnetic, optical, electromagnetic, infrared or a semiconductor system for a propagation medium, like e.g., solid state memory, a random access memory (RAM), a read-only memory (ROM).

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device such as an EPROM, or any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions, described herein can be downloaded to the respective computing devices, e.g. as a smartphone app from a service provider via a mobile network connection.

Computer readable program instructions for carrying out operations of the present invention may be any machine dependent or machine independent instructions, microcode, firmware instructions, state-setting data, or either source code or object code written in any combination of one or more programming languages, including an object-oriented programming language such as C++, Java or the like, and conventional procedural programming languages, such as the "C" programming language or similar programming languages. The computer readable program instructions may execute entirely on the computer device. In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus', or another device to cause a series of operational steps to be performed on the computer, other programmable apparatus' or other devices to produce a computer implemented process, such that the instructions which execute on the computer, other programmable apparatus', or another device, implement the functions/acts specified in the flowchart and/or block diagram block or blocks.

The flowcharts and/or block diagrams in the figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or act or carry out combinations of special purpose hardware and computer instructions.

The corresponding structures, materials, acts, and equivalents of all means or steps plus function elements in the claims below are intended to include any structure, material, or act for performing the function in combination with other claimed elements, as specifically claimed. The description of the present invention has been presented for purposes of illustration and description, but is not intended to be exhaustive or limited to the invention in the form disclosed. Many modifications and variations will be apparent to those of ordinary skills in the art without departing from the scope and spirit of the invention. The embodiments are chosen and described in order to best explain the principles of the invention and the practical application, and to enable others of ordinary skills in the art to understand the invention for various embodiments with various modifications, as are suited to the particular use contemplated.

**Claims**

1. A computer-implemented method for rating entities of a group of entities, wherein the entities rate each other, at least in parts, the method comprising

   - receiving rating values from rating entities $u_i$ of the group for one or more other entities $v_j$ of the group being rated, wherein a corresponding sequence indication of the rating is related to each of the rating values,
   - building a matrix of combined rating values, wherein the matrix element values $W_{ij}(u_i,v_j)$ are indicative of received ratings,
   - determining entropy values $h_i(u_i)$ for each entity $u_i$ of the group, wherein the entropy value $h_i(u_i)$ is indicative of a rate an entity rates other entities with a same rating value,
   - determining goodness values $g_j(v_j)$ for each entity $v_j$, wherein each of the goodness values is dependent from a respective fairness value $f_i(u_i)$ for each entity $u_i$ and the respective entropy value $h_i(u_i)$ of each entity $u_i$, the goodness value being indicative of a quality metric of the entity Vj,
   - determining the fairness values $f_i(u_i)$ for each entity $u_i$, wherein the fairness value is dependent on the related goodness value $g_j(v_j)$, the fairness value being indicative of a difference between the goodness of the rated entity $g_j(v_j)$ and the rating $W_{ij}(u_i,v_j)$ given by $u_i$, and
   - repeating the steps of determining the goodness values and the step of determining the fairness values until a stop condition is met, resulting in consistent goodness values for rated entities and consistent fairness values of rating entities.

2. The method according to claim 1, wherein the entropy value for an entity is determined by

$$h = - \sum[\text{for } i=1 \text{ to } n]\ p_i * \log(p_i),$$

   wherein

   n is a number of ratings an entity $v_j$ has given, and
   $p_i$ is a rate with which an entity gives a rating $r_i$.

3. The method according to claim 1 or 2, wherein the n*n matrix of combined rating values comprises as matrix elements values $W_{ij}(u_i, v_j)$ a weighted sum of received rating values.

4. The method according to claim 3, wherein the weighted sum of received ratings is an average value of received rating values.

5. The method according to claim 3, wherein, upon receiving a new rating value, a matrix element value is updated according to

$$W_{ij}(u_i, v_j)new = (1-\lambda) * W_{ij}(u_i, v_j)old + \lambda * (newRating\ value),$$

wherein $\lambda$ is a forgetfulness factor in the range $0 < ? < 1$.

6. The method according to any of the preceding claims, wherein each goodness value $g_j(v_j)$ is determined by

$$g_j(v_j) = (\sum[\text{for all entities } u_i \text{ which rate other entities } v_j]\ f_i(u_i) * W_{ij}\ (u_i, v_j) * h_i(u))$$
$$/ (\sum[\text{for all entities } u_i \text{ which rate other entities } v_j]\ h_i(u_i)).$$

7. The method according to claim 6, wherein each fairness value $f_i(u_i)$ is determined by

$$f_i(u_i) = 1 - (1 / R * O) * (\sum[\text{for all entities } v_j \text{ rated by entities } u_i]\ |\ W_{ij}(u_i,v_j) - g_j(v_j)\ |,$$

wherein

R = range of possible ratings, and
O = number of entities rated by entity $u_i$.

8. The method according to any of the preceding claims, wherein an entropy value of an entity not having been rated is determined as fixed value $h \in [0,1]$.

9. The method according to any of the preceding claims, where the stop condition is met if $X(f_i, f_i\text{-}1, g_j, g_j\text{-}1) \leq \varepsilon$, wherein $\varepsilon$ is a real value.

10. A rating system for rating entities of a group of entities, wherein the entities rate each other, at least in parts, the method comprising

- a receiving unit adapted for receiving rating values from rating entities $u_i$ of the group for one or more other entities $v_j$ of the group being rated, wherein a corresponding sequence indication of the rating is related to each of the rating values,
- a storage unit adapted for storing a matrix of combined rating values, wherein the matrix element values $W_{ij}(u_i,v_j)$ are indicative of received ratings,
- an entropy determination module adapted for determining entropy values $h_i(u_i)$ for each entity $u_i$ of the group, wherein the entropy value $h_i(u_i)$ is indicative of a rate an entity rates other entities with a same rating value,
- a goodness value determination module adapted for determining goodness values $g_j(v_j)$ for each entity $v_j$, wherein each of the goodness values is dependent from a respective fairness value $f_i(u_i)$ for each entity $u_i$ and the respective entropy value $h_i(u_i)$ of each entity $u_i$, the goodness value being indicative of a quality metric of the entity $v_j$,
- a fairness value determination module adapted for determining the fairness values $f_i(u_i)$ for each entity $u_i$, wherein the fairness value is dependent on the related goodness value $g_j(v_j)$, the fairness value being indicative of a difference between the goodness value of the rated entity $g_j(v_j)$ and the rating value $W_{ij}(u_i,v_j)$ given by $u_i$, and
- a trigger unit adapted for repeatedly triggering the goodness value determination module and the fairness value determination module until a stop condition is met, resulting in consistent goodness values for rated entities and consistent fairness values of rating entities.

11. A computer program product for rating entities of a group of entities, wherein the entities rate each other, at least in parts, the computer program product comprising a computer readable storage medium having program instructions embodied therewith, said program instructions being executable by one or more computing systems or controllers to cause said one or more computing systems to

- receive rating values from rating entities $u_i$ of the group for one or more other entities $v_j$ of the group being rated, wherein a corresponding sequence indication of the rating is related to each of the rating values,
- build a matrix of combined rating values, wherein the matrix element values $W_{ij}(u_i, v_j)$ are indicative of received ratings,
- determine entropy values $h_i(u_i)$ for each entity $u_i$ of the group, wherein the entropy value $h_i(u_i)$ is indicative of a rate an entity rates other entities with a same rating value,
- determine goodness values $g_j(v_j)$ for each entity $v_j$, wherein each of the goodness values is dependent from a respective fairness value $f_i(u_i)$ for each entity $u_i$ and the respective entropy value $h_i(u_i)$ of each entity $u_i$, the goodness value being indicative of a quality metric of the entity Vj,
- determine the fairness values $f_i(u_i)$ for each entity $u_i$, wherein the fairness value is dependent on the related goodness value $g_j(v_j)$, the fairness value being indicative of a difference between the goodness value of the rated entity $g_j(v_j)$ and the rating value $W_{ij}(u_i,v_j)$ given by $u_i$, and
- repeat the steps of determining the goodness values and the step of determining the fairness values until a stop condition is met, resulting in consistent goodness values for rated entities and consistent fairness values of rating entities.

100

### 102 receiving rating values

### 104 building a matrix of combined rating values

### 106 determining entropy values

### 108 repeating until convergence

#### 110 determining the goodness values

#### 112 determining the fairness values

FIG. 1

200                                                                          202

|     | W1 | W2 | W3 | W4 | E1 | E2 | E3 | h   |
|-----|----|----|----|----|----|----|----|-----|
| W1  |    |    |    |    | ✚/➖ |    | ✚ | 0.9 |
| W2  |    |    |    |    |    | ✚ | ✚ | 0   |
| W3  |    |    |    |    | ✚ | ➖ | ✚ | 0.9 |
| W4  |    |    |    |    |    |    | ✚ | 0   |
| E1  | ✚ |    | ➖ |    |    |    |    | 0.9 |
| E2  |    | ✚ | ➖ |    |    |    |    | 1   |
| E3  | ✚ | ✚ | ✚ | ✚ |    |    |    | 0   |

FIG. 2

FIG. 3

400

304

306

+

−

402

200    202

404

408

| $u_i$ | $f_i$ | $g_i$ |
|-------|-------|-------|
| w1 | | |
| w2 | | |
| w3 | | |
| w4 | | |
| e1 | | |
| e2 | | |
| e3 | | |

410

406

$g_j$    $f_i$

FIG. 4

500

```
502   determine entropy
```

```
504   determine goodness
      value of next user
```

N

```
506   every entity has a
      goodness value ?
```

Y

```
508   determine fairness
      value of next user
```

```
510   each entity has a
      fairness value ?
```

N

Y

```
512   determine convergence
      criterion X(f_{i-1}, f_i, g_{i-1}, g_i)
```

```
514   X ≤ ε?
```

Y

```
516
stop
```

N

FIG. 5

600

602 receiving unit

614

604 storage unit

606 entropy
determination
module

608 goodness val.
determination
module

610 fairness value
determination
module

612 trigger unit

FIG. 6

700

computer system

704

702
processing
unit

708 RAM

710
cache

712

716

706

714
I/O interfaces

600
rating system

722  network
adapter

718  external
devices

720
display

FIG. 7

Europäisches
Patentamt

European
Patent Office

Office européen
des brevets

# EUROPEAN SEARCH REPORT

Application Number

EP 20 15 4159

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 892 179 B1 (ZACHARIA GIORGOS C [CY]) 10 May 2005 (2005-05-10) <br> * abstract; figures 13, 15, 17, 18 * <br> * column 26, line 29 - column 35, line 54 * | 1-11 | INV. <br> G06Q10/06 <br> G06Q50/00 <br> G06Q10/04 |
| X | US 2016/034840 A1 (VENANZI MATTEO [GB] ET AL) 4 February 2016 (2016-02-04) <br> * abstract; figures 4-7 * <br> * paragraphs [0033] - [0042] * <br> * paragraphs [0017] - [0021] * <br> * paragraphs [0083] - [0085] * | 1-11 | |
| X | WO 2013/026095 A1 (MATSUMOTO YASHIMASA [AU]; HUNT JOHN [AU]; VAN ACOLEYEN JEF [BE]) 28 February 2013 (2013-02-28) <br> * abstract; figures 1, 7 * <br> * page 9, line 25 - page 10, line 27 * <br> * page 28, line 18 - page 33, line 24 * | 1-11 | |
| X | US 2017/364810 A1 (GUSEV GLEB GENNADIEVICH [RU] ET AL) 21 December 2017 (2017-12-21) <br> * paragraphs [0062] - [0092] * <br> * paragraphs [0114] - [0132] * | 1-11 | TECHNICAL FIELDS SEARCHED (IPC) <br><br> G06Q |
| X | US 2017/249698 A1 (CHAN LEO M [CA] ET AL) 31 August 2017 (2017-08-31) <br> * abstract; figures 1, 2 * <br> * paragraphs [0094] - [0096] * <br> * paragraphs [0102] - [0107] * <br> * paragraphs [0056] - [0062] * | 1-11 | |

The present search report has been drawn up for all claims

| Place of search | Date of completion of the search | Examiner |
|---|---|---|
| Munich | 2 June 2020 | Mülthaler, Evelyn |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 15 4159

This annex lists the patent family members relating to the patent documents cited in the above-mentioned European search report.
The members are as contained in the European Patent Office EDP file on
The European Patent Office is in no way liable for these particulars which are merely given for the purpose of information.

02-06-2020

| Patent document cited in search report | | | Publication date | Patent family member(s) | | | Publication date |
|---|---|---|---|---|---|---|---|
| US | 6892179 | B1 | 10-05-2005 | NONE | | | |
| US | 2016034840 | A1 | 04-02-2016 | NONE | | | |
| WO | 2013026095 | A1 | 28-02-2013 | NONE | | | |
| US | 2017364810 | A1 | 21-12-2017 | RU | 2637883 | C1 | 07-12-2017 |
| | | | | US | 2017364810 | A1 | 21-12-2017 |
| US | 2017249698 | A1 | 31-08-2017 | CA | 3015926 | A1 | 08-09-2017 |
| | | | | CN | 109074389 | A | 21-12-2018 |
| | | | | US | 9438619 | B1 | 06-09-2016 |
| | | | | US | 9584540 | B1 | 28-02-2017 |
| | | | | US | 9747640 | B1 | 29-08-2017 |
| | | | | WO | 2017147693 | A1 | 08-09-2017 |

EPO FORM P0459

For more details about this annex : see Official Journal of the European Patent Office, No. 12/82